# EUROPÄISCHE PATENTSCHRIFT

(11) **EP 3 693 233 B1**
(45) Veröffentlichungstag und Bekanntmachung des Hinweises auf die Patenterteilung: **27.04.2022**
(21) Anmeldenummer: 20000047.9
(22) Anmeldetag: 29.01.2020
(51) Int. Cl.: B60R 25/04

(54) **SICHERHEITSMODUS BEI ERSETZTEN ECUS**
SAFETY MODE IN CASE OF REPLACED ENGINE CONTROL UNITS
MODE DE SÉCURITÉ EN CAS DE CALCULATEURS MOTEUR REMPLACÉS

(30) Priorität: 11.02.2019 DE 102019000976
(43) Veröffentlichungstag der Anmeldung: 12.08.2020
(73) Patentinhaber: Giesecke+Devrient Mobile Security GmbH, 81677 München (DE)
(72) Erfinder: Rudorff, Ingo, 81739 München (DE)
(74) Vertreter: Giesecke + Devrient IP

(56) Entgegenhaltungen:
- EP-A2- 0 723 896
- EP-A2- 1 118 514
- DE-A1- 4 333 474
- DE-A1- 10 021 811
- DE-A1- 19 955 545
- DE-A1-102016 212 230
- US-A1- 2004 003 243
- US-A1- 2019 042 758

## Beschreibung

Die vorliegende Erfindung ist auf ein Verfahren zum sicheren Betreiben eines modularen Systems in einem Kraftfahrzeug gerichtet, insbesondere auf ein Verfahren, welches sicherstellt, dass bei gefälschten Engine Control Units ECUs lediglich ein eingeschränkter Betrieb des Kraftfahrzeugs durchgeführt wird. Die vorliegende Erfindung ist ferner gerichtet auf eine entsprechend eingeordnete Systemanordnung sowie auf ein Computerprogrammprodukt mit Steuerbefehlen, welche das Verfahren implementieren bzw. die Systemanordnung betreiben.

WO 2017/119 027 A1 zeigt eine Betrugserkennungsmethode, wobei Kontrolleinheiten mittels eines Bussystems untereinander kommunizieren.

US 2013/0 243189 A1 zeigt ein Verfahren und eine Vorrichtung zum Authentifizieren von Sensoren, beispielsweise in einem Fahrzeug. Ferner zeigt diese Veröffentlichung ein Verwenden von kryptographischen Verfahren in Zusammenhang mit einer gesicherten Umgebung.

DE 10 2013 206 185 A1 zeigt ein Verfahren zur Datenübertragung zwischen einem Sensor und einer elektronischen Steuereinrichtung. Hierbei werden die Sensordaten und der Sensor gegen eine Manipulation gesichert. Ferner zeigt diese Druckschrift, dass Sensoren an eine sogenannte Engine Control Unit ECU gekoppelt sind. Darüber hinaus werden kryptographische Verfahren vorgeschlagen.

EP 1 118 514 offenbart ein Verfahren nach dem Oberbegriff des Anspruchs 1 und eine Vorrichtung nach dem Oberbegriff des Anspruchs 13

Der Stand der Technik sieht eine Datenschnittstelle vor, welche eine Verbindung zwischen einem externen Server und einer fahrzeuginternen Steuereinheit bereitstellt. Die Steuereinheit weist ferner ein Sicherheitselement auf. Entsprechende Sicherheitselemente sind auch in den ECUs verbaut. Somit lässt sich jede ECU derart auslesen, dass beispielsweise eine Seriennummer bereitgestellt werden kann. Der Server hält eine Liste valider Seriennummern vor und vergleicht die bereitgestellte Seriennummer.

Ferner ist es bekannt, innerhalb eines Fahrzeugs Testroutinen zu starten, welche insbesondere dann ausgeführt werden, falls das Fahrzeug gestartet bzw. gebootet wird. Auch ist eine Kommunikation innerhalb des Fahrzeugs bekannt, welche kryptographische Verfahren verwendet.

In Automobilen sind heutzutage eine Vielzahl von sogenannten ECUs (Engine Control Units) verbaut, die miteinander kommunizieren und die die verschiedensten Aufgaben wahrnehmen. Die Produktion der entsprechenden ECUs wird üblicherweise vom Automobilhersteller oder -zulieferer an Auftragsfertiger vergeben. Letztere sind häufig in Niedriglohnländern angesiedelt. Vor diesem Hintergrund existieren sogenannte "graue" ECUs. Diese wurden zwar von einem zugelassenen Auftragsfertiger hergestellt, jedoch nicht vom Automobilhersteller oder -zulieferer genehmigt.

Die insgeheim produzierten ECUs enthalten gültige kryptographische Zertifikate und Schlüssel und sind auch - im allgemeinen - von der Qualität nicht schlechter als die genehmigt hergestellten ECUs. Die "grau" produzierten ECUs werden für einen günstigeren als den Originalpreis auf dem Graumarkt verkauft, womit der Auftragsfertiger einen Teil der Marge des Automobilherstellers/-zulieferers abgreift. Garantiefälle muss jedoch der Automobilhersteller/-zulieferer abwickeln und bezahlen, da es sich offiziell um "seine" ECU handelt. Es liegt deshalb im Interesse der Automobilhersteller/- zulieferer, den Einbau und/ oder die Nutzung von "grauen" ECUs zu unterbinden. Dafür stellt das Automobil nach dem Einbau einer Austausch-ECU eine Netzwerkverbindung zu einem Server her, der - grob gesagt - prüft, ob die laufende Serial ID der ECU sich innerhalb eines zulässigen Nummernbereichs befindet. Ist dies nicht der Fall, gibt der Server eine negative Rückmeldung an das Fahrzeug und das Fahrzeug lässt sich nicht starten.

Es ist somit eine Aufgabe der vorliegenden Erfindung, ein verbessertes Verfahren zum sicheren Betreiben eines modularen Systems in einem Kraftfahrzeug vorzuschlagen, bei dem gewährleistet wird, dass die Sicherheit des Kraftfahrzeugs auch dann gewährleistet ist, falls falsche bzw. nichtspezifikationsgemäße Steuereinrichtungen eingebaut werden. Darüber hinaus ist es eine Aufgabe der vorliegenden Erfindung, eine entsprechend eingerichtete Systemanordnung vorzuschlagen sowie ein Computerprogrammprodukt mit Steuerbefehlen, welche das vorgeschlagene Verfahren implementieren bzw. die Systemanordnung betreiben. Es soll generell die Aufgabe gelöst werden, dem Fahrzeugbenutzer ein sicheres und funktionstüchtiges Fahrzeug zur Verfügung zu stellen, auch wenn unmittelbar nach einer Reparatur nicht zuverlässig nachgeprüft werden kann, ob es sich bei den Austauschteilen, insbesondere den ECUs, um einwandfreie Produkte handelt.

Die Aufgabe wird gelöst mit den Merkmalen der unabhängigen Patentansprüche. Weitere vorteilhafte Ausgestaltungen sind in den abhängigen Patentansprüchen angegeben.

Demgemäß wird ein Verfahren zum sicheren Betreiben eines modularen Systems in einem Kraftfahrzeug vorgeschlagen, aufweisend ein Bereitstellen einer zentralen Steuervorrichtung, ein Bereitstellen einer Mehrzahl von Steuereinrichtungen, welche jeweils mit der zentralen Steuervorrichtung kommunikativ gekoppelt sind, wobei ein Aktivieren eines Sicherheitsmodus bei einem Starten der Steuervorrichtung und der Mehrzahl von Steuereinrichtungen, ein iteratives Abprüfen mindestens eines vorbestimmten Qualitätsmerkmals der Steuereinrichtungen durch die Steuervorrichtung und ein Deaktivieren des Sicherheitsmodus, falls bei allen Steuereinrichtungen das abgeprüfte Qualitätsmerkmal vorhanden ist, vorgesehen ist.

Die vorliegende Erfindung beschäftigt sich mit der Verifikation von sogenannten Engine Control Units ECUs. Solche ECUs werden in großer Stückzahl hergestellt und mehrfach in Automobilen verbaut. Hierbei besteht jedoch das Problem, dass solche ECUs auch unautorisiert hergestellt werden können. Dies erfolgt in den gleichen Produktionsstätten wie autorisierte ECUs, wobei eine Überproduktion auf einem Graumarkt verkauft wird. Aufgrund einer Haftungsproblematik und weiterer wirtschaftlicher Nachteile sind Hersteller angehalten, solche unautorisierten Vertriebe von ECUs zu unterbinden.

Erfindungsgemäß wird der Nachteil überwunden, dass zur Verifikation der jeweiligen ECUs eine Verbindung zu einem zentralen Server hergestellt werden muss. Dies ist aufgrund von Funklöchern bzw. generell schlechter Netzabdeckung nicht immer möglich. Somit ist es also nachteilig, dass gemäß dem Stand der Technik die ECUs nicht sofort überprüft werden können, was auch zu einem Sicherheitsrisiko führt.

Bei dem vorgeschlagenen modularen System handelt es sich um Komponenten eines Kraftfahrzeugs, wobei u. a. mindestens eine Steuervorrichtung und mehrere Steuereinrichtungen vorgesehen sind. Darüber hinaus sind innerhalb des modularen Systems weitere Komponenten verbaut, die anhand der Steuervorrichtung und/oder der Steuereinrichtungen angesprochen werden. Die Steuervorrichtung und die Steuereinrichtungen dienen insbesondere dazu, Fahrparameter eines Motors des Kraftfahrzeugs einzustellen. Darüber hinaus sind weitere Komponenten vorhanden, welche ebenfalls mindestens anhand der Steuereinrichtungen angesprochen werden. Der Fachmann kennt entsprechende Steuereinrichtungen und kennt demgemäß auch die Funktionen, die von so einer Steuereinrichtung bereitgestellt werden. Bevorzugt liegt eine solche Steuervorrichtung als eine sogenannte Engine Control Unit ECU vor.

Ein sicheres Betreiben des modularen Systems erfolgt deshalb, da die Steuereinrichtungen u. a. nach einem Austausch überprüft werden und das Kraftfahrzeug lediglich in einem abgesicherten Modus betrieben wird. Der abgesicherte Modus wird gleich mit dem Starten des Kraftfahrzeugs aktiviert und bleibt solange aktiv, bis sichergestellt wird, dass die verbauten Steuereinrichtungen den Qualitätsanforderungen entsprechen.

Ein weiterer Aspekt der vorliegenden Erfindung ist es, dass das sichere Betreiben der einzelnen Vorrichtungen dadurch sichergestellt wird, dass in vorteilhafter Weise eine Kommunikation innerhalb des modularen Systems verschlüsselt wird. Hierzu werden spezialisierte Verfahrensschritte vorgeschlagen, welche so im Kraftfahrzeugbereich nicht bekannt sind. Diese Verschlüsselungen und kryptographischen Verfahren im Generellen dienen der Absicherung des Kommunikationskanals und stellen sicher, dass tatsächlich auch die Kommunikationspartner vorhanden sind, die jeweils vorgesehen sind. Somit wird es erfindungsgemäß verhindert, dass gefälschte Steuereinrichtungen als echte Steuereinrichtungen erkannt werden. Die vorgeschlagenen kryptographischen Absicherungen sind speziell auf das Kommunikationsnetz innerhalb eines Kraftfahrzeugs ausgelegt, und folglich liegt auch hier eine Transferleistung derart vor, dass teilweise bekannte Verfahrensschritte erfindungsgemäß derart angepasst werden, dass sie im Kraftfahrzeug Einsatz finden und insbesondere bezüglich der vorgeschlagenen Verfahren bzw. Systemanordnungen Einsatz finden können.

Generell wird erfindungsgemäß vorgeschlagen, dass eine zentrale Steuervorrichtung bereitgestellt wird, die kommunikativ mit einer Mehrzahl von Steuereinrichtungen gekoppelt ist. Folglich handelt es sich um eine Hierarchie innerhalb des Kraftfahrzeugs, wobei die Steuervorrichtung den Steuereinrichtungen übergeordnet ist. Die Steuervorrichtung ist gemäß einem Aspekt der vorliegenden Erfindung eingerichtet, mit jeder der Steuereinrichtungen aus der Mehrzahl von Steuereinrichtungen zu kommunizieren. Hierzu ist ein Bussystem zu implementieren, welches die Steuervorrichtung mit den Steuereinrichtungen kommunikativ koppelt. Erfindungsgemäß ist es besonders vorteilhaft, dass auch herkömmliche Steuervorrichtungen und Steuereinrichtungen verwendet werden können, und somit ist es besonders vorteilhaft, dass auch bestehende Systeme nachgerüstet werden. So kann eine bestehende zentrale Steuervorrichtung mitsamt den entsprechenden Steuereinrichtungen erfindungsgemäß wiederverwendet werden und es kann auch ein entsprechender Bus weiterhin verwendet werden.

An die Steuereinrichtungen sind weitere Komponenten gekoppelt, die von den Steuereinrichtungen betrieben bzw. angesprochen werden. Die angeschlossenen Komponenten regeln u. a. den Betrieb des Kraftfahrzeugs, was nicht auf den Antrieb beschränkt ist. Erfindungsgemäß ist es vorteilhaft, dass anhand der Steuereinrichtungen unterschiedliche Komponenten betrieben werden können, da eben auch eine Vielzahl von Komponenten für einen sicheren Betrieb des Kraftfahrzeugs notwendig sind. Besonders bevorzugt werden mittels der Steuereinrichtungen Komponenten betrieben, die sich auf die Motorsteuerung, Lenkung bzw. die Bremsen beziehen. Somit wird erfindungsgemäß verhindert, dass kritische Komponenten von fehlerhaften Steuereinrichtungen angesteuert werden. Dies ist jedoch nicht einschränkend zu verstehen, sondern vielmehr werden mittels der Steuereinrichtungen potenziell jegliche Arten von Komponenten gesteuert.

In einem vorbereitenden Verfahrensschritt erfolgt generell ein Aktivieren eines Sicherheitsmodus des modularen Systems bzw. entsprechender Komponenten des Kraftfahrzeugs. Dies ist der Fall, da initial nicht bekannt ist, ob die verbauten Steuereinrichtungen tatsächlich Qualitätsanforderungen entsprechen oder nicht. Folglich wird stets ein abgesicherter Modus aktiviert, und insbesondere erfolgt dies bei einem Starten der Steuervorrichtungen und der Mehrzahl von Steuereinrichtungen. Ein Starten liegt beispielsweise dann vor, falls der Motor gestartet wird bzw. falls die Steuervorrichtung und die Steuereinrichtungen mit Strom beaufschlagt werden. Typischerweise entspricht dies einem Starten des Kraftfahrzeugs. Folglich liegt erst mal ein Sicherheitsmodus vor und es ist erfindungsgemäß vorgesehen, dass entsprechende Komponenten des Kraftfahrzeugs zuerst nicht die volle Leistung erbringen können. Hierdurch wird sichergestellt, dass der Motor bzw. das modulare System nicht mit Parametern betrieben wird, die ein Sicherheitsrisiko bei gefälschten Steuereinrichtungen verursachen würden.

Ob nunmehr Qualitätsmerkmale innerhalb der Steuereinrichtungen vorliegen oder nicht, erfolgt durch ein iteratives Abprüfen durch die Steuervorrichtung. Erfindungsgemäß ist vorgesehen, dass die Steuervorrichtung an einem solchen Abprüfen beteiligt ist, was weitere Komponenten nicht ausschließt. Insbesondere wird die Steuervorrichtung typischerweise eine Datenkommunikation mit einem Server aufbauen und hierbei abprüfen, ob die ausgelesenen Merkmale einer Steuereinrichtung den Anforderungen entsprechen. Somit ist an dem iterativen Abprüfen neben der Steuervorrichtung typischerweise eine zentrale Recheneinheit beteiligt sowie netzwerktechnische Komponenten, die einen Kommunikationskanal zwischen der Steuervorrichtung und der zentralen Recheneinheit einrichten. Der zugrundeliegende Kommunikationskanal wird zumindest teilweise drahtlos, also mittels einer Luftschnittstelle, implementiert. Typischerweise verfügt das Kraftfahrzeug über eine drahtlose Kommunikationsschnittstelle, welche anhand eines Mobilfunknetzwerks mit einem Server kommuniziert. Insbesondere kann eine Internetverbindung von dem Kraftfahrzeug zu dem Server erfindungsgemäß verwendet werden.

Ein iteratives Abprüfen sieht vor, dass die Qualitätsmerkmale nicht lediglich einmal abgeprüft werden, sondern vielmehr können diese Qualitätsmerkmale öfter abgeprüft werden, insbesondere falls eine Netzwerkkommunikation scheitert. So ist es generell möglich, dass sich das Kraftfahrzeug in einem Funkloch bewegt bzw. dass die verfügbare Bandbreite nicht ausreichend ist. Somit führt das Abprüfen der Qualitätsmerkmale zu einem Scheitern, und es muss in einer weiteren Iteration erneut abgeprüft werden, ob die Qualitätsmerkmale vorhanden sind. Liegt nunmehr tatsächlich eine geeignete Datenverbindung vor, so kann das Abprüfen positiv erfolgen und der Sicherheitsmodus kann wieder aufgehoben werden. Das iterative Abprüfen kann mindestens einmal ausgeführt werden und wird insbesondere solange ausgeführt, bis entweder das Qualitätsmerkmal aller Steuereinrichtungen identifiziert wurde oder aber auch ein Abbruchkriterium erreicht wurde.

Für den Fall, dass bei allen Steuereinrichtungen das abgeprüfte Qualitätsmerkmal vorhanden ist, kann der Sicherheitsmodus wieder aufgehoben werden und es kann wieder in einen normalen Betriebsmodus des modularen Systems bzw. der Steuervorrichtung und der Steuereinrichtungen übergegangen werden. Erfindungsgemäß ist es besonders vorteilhaft, lediglich die Steuereinrichtungen abzuprüfen, welche neu installiert werden. Für den Fall, dass dies nicht bekannt ist, ist es stets erforderlich, alle Steuereinrichtungen abzuprüfen. Beispielsweise kann eine Historie angelegt werden, die beschreibt, wann eine Steuereinrichtung gewechselt wurde. Dies kann u. a. anhand einer Seriennummer festgestellt werden. Das Qualitätsmerkmal der Steuereinrichtung kann derart hinterlegt werden, dass eine Liste von Seriennummern hinterlegt wird, bezüglich derer das Qualitätsmerkmal gegeben ist. So können Listen von Identifikationen von Steuereinrichtungen abgespeichert werden, und hierbei wird dokumentiert, welche Steuereinrichtungen echt sind und somit das Qualitätsmerkmal implizit verwirklichen. Ein entsprechendes Qualitätsmerkmal kann jedoch auch dynamisch zur Laufzeit empirisch ermittelt werden.

Damit kein Sicherheitsrisiko besteht, wird der Sicherheitsmodus solange ausgeführt, bis Klarheit darüber herrscht, dass alle Steuereinrichtungen tatsächlich echt sind bzw. das Qualitätsmerkmal verwirklichen. Bei einer echten Steuereinrichtung, d. h. bei einer autorisierten Steuereinrichtung, liegt typischerweise das Qualitätsmerkmal implizit vor, weshalb hier lediglich die Echtheit geprüft werden muss. Gegebenenfalls kann jedoch auch eine Steuereinrichtung, die echt ist, ein Qualitätsmerkmal nicht verwirklichen, und somit wird optional geprüft, ob tatsächlich ein gefordertes Qualitätsmerkmal vorhanden ist oder nicht. Ist eine Steuereinrichtung nicht autorisiert, so wird zuerst unterstellt, dass das Qualitätsmerkmal nicht verwirklicht ist.

Ein Beispiel für ein Qualitätsmerkmal ist neben einer gültigen Seriennummer ein Vorhandensein von einem gewissen Maß an Fehlerrobustheit bzw. Performanz. Der Fachmann erkennt hierbei weitere Qualitätsmerkmale, die eine Steuereinrichtung auszeichnen, insbesondere falls diese als eine Engine Control Unit vorliegt. Ein Deaktivieren des Sicherheitsmodus impliziert generell, dass wieder in einen normalen Betrieb übergegangen wird.

Gemäß einem Aspekt der vorliegenden Erfindung werden die Steuereinrichtungen und/ oder die Steuervorrichtung jeweils als Engine Control Unit ECU bereitgestellt. Dies hat den Vorteil, dass auch herkömmliche Systemanordnungen erfindungsgemäß betrieben werden, und es müssen lediglich Steuerbefehle angepasst werden, damit die entsprechenden Komponenten erfindungsgemäß angesteuert werden. Somit können auch herkömmliche Kraftfahrzeuge erfindungsgemäß derart aufgerüstet werden, dass ein Sicherheitsmodus aktiviert wird, solange nicht bekannt ist, ob die Steuereinrichtungen vorbestimmten Qualitätsmerkmalen entsprechen.

Gemäß einem weiteren Aspekt der vorliegenden Erfindung kommunizieren die Steuereinrichtungen und die Steuervorrichtung mittels mindestens einer kryptographisch gesicherten Verbindung. Dies hat den Vorteil, dass sichergestellt wird, dass eine Steuereinrichtung nicht vorgeben kann, eine autorisierte Steuereinrichtung zu sein, solange sichergestellt wird, dass mittels der gesicherten Verbindung eine Kommunikation nicht abgefälscht wird. Darüber hinaus ermöglicht es eine gesicherte Verbindung, die Kommunikationspartner sicher zu verifizieren, derart, dass eine Steuereinrichtung keine falsche Identität vorspielen kann. Die gesicherte Verbindung kann auf kryptographische Verfahren zurückgreifen, welche in einem Kraftfahrzeug geeignet sind.

Gemäß einem weiteren Aspekt der vorliegenden Erfindung sieht der Sicherheitsmodus eine eingeschränkte Konfiguration des Kraftfahrzeugs vor. Dies hat den Vorteil, dass sicherheitskritische Wertebereiche erfindungsgemäß nicht erreicht werden können und der Sicherheitsmodus stets dafür sorgt, dass eine sichere Fahrt bzw. ein sicheres Betreiben des Kraftfahrzeugs jederzeit möglich ist, auch falls eine gefälschte Steuerungseinrichtung vorliegt. Eine eingeschränkte Konfiguration stellt insbesondere darauf ab, dass der Wertebereich von Parametern eingeschränkt wird, und somit werden kritische Situationen vermieden. Beispielsweise kann eine Drehzahl oder eine Geschwindigkeit begrenzt werden. So kann das Kraftfahrzeug generell auch mit einer gefälschten Steuereinrichtung bewegt werden, wobei die Performanz des Kraftfahrzeugs derart eingeschränkt wird, dass der Kunde stets eine Werkstatt aufsuchen wird. Somit wird also ein Liegenbleiben des Kraftfahrzeugs vermieden und die Steuereinrichtung kann alsbald ausgetauscht werden.

Gemäß einem weiteren Aspekt der vorliegenden Erfindung umfasst der Sicherheitsmodus eine Begrenzung einer maximalen Drehzahl eines Motors, eine Veränderung eines Beschleunigungsverhaltens, eine Begrenzung einer maximalen Geschwindigkeit des Kraftfahrzeugs, eine zeitliche Nutzungsbegrenzung und/oder eine Umsetzung einer Sicherheitsmaßnahme. Dies hat den Vorteil, dass ein sicheres Betreiben des Kraftfahrzeugs gewährt wird und lediglich die Parameterbereiche angesteuert werden, die entweder nicht sicherheitskritisch sind oder aber die anhand einer qualitativ nachteiligen Steuereinrichtung vertretbar sind.

Gemäß einem weiteren Aspekt der vorliegenden Erfindung wird das mindestens eine vorbestimmte Qualitätsmerkmal statisch und/oder dynamisch definiert. Da mehrere Qualitätsmerkmale vorliegen können oder aber auch komplexe Qualitätsmerkmale, ist es generell möglich, diese sowohl statisch als auch dynamisch zu definieren. Bei einem statischen Qualitätsmerkmal handelt es sich beispielsweise um eine vorgegebene Seriennummer, die eine Qualität impliziert. Bei einem dynamischen Qualitätsmerkmal kann es sich beispielsweise um eine Performanzanforderung bzw. eine Fehlerrobustheit handeln, welche erst zur Laufzeit detektiert werden muss. So kann eine dynamische Anforderung auch prozentual angegeben werden und kann zur Laufzeit dynamisch ermittelt werden.

Gemäß einem weiteren Aspekt der vorliegenden Erfindung werden zum Abprüfen des mindestens einen vorbestimmten Qualitätsmerkmals die Steuereinrichtungen dynamisch angesteuert. Dies hat den Vorteil, dass während einer Laufzeit der erfindungsgemäßen Komponenten Wertebereiche abgeprüft werden können und hierbei kann empirisch ermittelt werden, wie sich die jeweilige Steuereinrichtung verhält. Das Verhalten kann sodann überprüft werden, und es wird festgestellt, ob das Qualitätsmerkmal in der jeweiligen Steuereinrichtung verwirklicht ist.

Gemäß einem weiteren Aspekt der vorliegenden Erfindung werden zum Abprüfen des mindestens einen vorbestimmten Qualitätsmerkmals die Steuereinrichtungen sensorisch ausgelesen. Dies hat den Vorteil, dass eine Vielzahl von Sensoren vorgesehen werden kann, die sich nicht auf abgespeicherte Werte verlassen müssen, sondern vielmehr können die Sensoren die tatsächlich vorhandenen Parameter ausmessen, und somit wird empirisch ermittelt, ob die Qualitätsmerkmale verwirklicht sind. Darüber hinaus ist es vorteilhaft, für einen Parameterwert mehrere Sensoren redundant vorzusehen, so dass wiederum die Sicherheit des vorgeschlagenen Verfahrens erhöht wird.

Gemäß einem weiteren Aspekt der vorliegenden Erfindung wird zum Abprüfen des mindestens einen vorbestimmten Qualitätsmerkmals eine Verbindung mit einem Server eingerichtet. Dies hat den Vorteil, dass nicht nur abgespeicherte Qualitätsmerkmale bzw. Wertebereiche berücksichtigt werden müssen, sondern vielmehr kann das vorgeschlagene Verfahren mittels einer Datenkommunikation Werte überprüfen. Somit ist es auch möglich, dass Identifikationsnummern nachträglich in den Server eingespeichert werden und sodann mit Identifikationsnummern abgeglichen werden, die im Feld ermittelt werden. So können unterschiedliche Steuereinrichtungen bezüglich ihrer Identifikationsnummern abgeprüft werden, und falls eine Datenkommunikation gelingt, ist es möglich, die aktuellen Listen von einem Server abzurufen. Folglich können also neu gebaute und autorisierte Steuereinrichtungen stets abgeprüft werden, da entsprechende Identifikationsnummern dynamisch auf einem Server hinterlegt werden können. Generell ist es erfindungsgemäß auch möglich, im Nachhinein Identifikationsnummern zu streichen, so dass Chargen, welche sich als defekt erwiesen haben, gelöscht werden und somit ein sicherer Modus im Kraftfahrzeug wiederhergestellt wird. Die entsprechenden Steuereinrichtungen müssen sodann ausgetauscht werden.

Gemäß einem weiteren Aspekt der vorliegenden Erfindung wird zum Abprüfen des mindestens einen vorbestimmten Qualitätsmerkmals eine Identifikationsnummer mindestens einer Steuereinrichtung überprüft. Dies hat den Vorteil, dass Identifikationsnummern abgespeichert werden können, welche angeben, dass ein Qualitätsmerkmal implizit vorhanden ist. Somit kann von der Echtheit der Steuereinrichtung auf dessen Qualität geschlossen werden und es wird ein ordnungsgemäßer Betrieb unterstellt. Gemäß einem weiteren Aspekt der vorliegenden Erfindung wird mittels der Steuereinrichtungen und/oder der Steuervorrichtung mindestens eine Funktion eines Kraftfahrzeugs mit Elektromotor und/ oder Verbrennungsmotor gesteuert. Dies hat den Vorteil, dass erfindungsgemäß jegliche Kraftfahrzeuge sicher betrieben werden können, und insbesondere kann sowohl ein Elektromobil als auch ein herkömmliches Automobil mit Verbrennungsmotor angesteuert werden. Darüber hinaus können beide Motoren vorliegen und es wird erfindungsgemäß ein Hybridfahrzeug gesteuert.

Gemäß einem weiteren Aspekt der vorliegenden Erfindung wird das iterative Abprüfen bei einem Erreichen eines Abbruchkriteriums nicht mehr ausgeführt, sondern es wird eine Fehlerroutine gestartet. Dies hat den Vorteil, dass nicht ein endloses Abprüfen durchgeführt werden muss, sondern vielmehr kann eine Anzahl an Iterationen festgelegt werden, oder es kann ein zeitlicher Bereich festgelegt werden, wann das Abprüfen fehlgeschlagen ist. So kann beispielsweise angenommen werden, dass, falls für eine halbe Stunde keine Netzwerkverbindung besteht und das Abprüfen jeweils gescheitert ist, auch kein positives Abprüfen mehr möglich ist, und folglich kann Rechenaufwand eingespart werden. Eine Fehlerroutine kann vorsehen, dass der Fahrer gewarnt wird und aufgefordert wird, eine Werkstatt aufzusuchen.

Gemäß einem weiteren Aspekt der vorliegenden Erfindung sieht das Deaktivieren des Sicherheitsmodus ein Ausführen eines normalen Betriebsmodus vor. Dies hat den Vorteil, dass das vorgeschlagene Verfahren nicht mehr ausgeführt werden muss und es entsprechenderweise terminiert. Somit wird eingestellt, dass alle Steuereinrichtungen ordnungsgemäß arbeiten und der Schutzmechanismus, wie er erfindungsgemäß implementiert wird, wird abgeschaltet.

Die Aufgabe wird auch gelöst durch eine Systemanordnung zum sicheren Betreiben eines modularen Systems in einem Kraftfahrzeug, aufweisend eine erste Bereitstellungseinheit eingerichtet zum Bereitstellen einer zentralen Steuervorrichtung, eine zweite Bereitstellungseinheit eingerichtet zum Bereitstellen einer Mehrzahl von Steuereinrichtungen, welche jeweils mit der zentralen Steuervorrichtung kommunikativ gekoppelt sind, wobei eine Sicherungseinheit eingerichtet zum Aktivieren eines Sicherheitsmodus bei einem Starten der Steuervorrichtung und der Mehrzahl von Steuereinrichtungen, eine Prüfeinheit eingerichtet zum iterativen Abprüfen mindestens eines vorbestimmten Qualitätsmerkmals der Steuereinrichtungen durch die Steuervorrichtung und eine Freigabeeinheit eingerichtet zum Deaktivieren des Sicherheitsmodus, falls bei allen Steuereinrichtungen das abgeprüfte Qualitätsmerkmal vorhanden ist, vorgesehen ist.

Der Fachmann erkennt hierbei, dass die Bereitstellungseinheiten als getrennte Bereitstellungseinheiten vorliegen können, oder aber auch als eine gemeinsame Bereitstellungseinheit. Darüber hinaus kann eine solche Einheit datentechnisch implementiert werden, und es ist vorgesehen, dass die Steuervorrichtung bzw. die Steuereinrichtungen erfindungsgemäß derart angesprochen werden, dass diese dem zugrundeliegenden Verfahren zugänglich sind. So kann das Bereitstellen der Steuervorrichtungen derart virtuell erfolgen, dass bestehende Steuervorrichtungen bzw. Steuereinrichtungen bereits physisch vorliegen, aber mittels einer Schnittstelle dem System zugänglich gemacht werden. Somit werden diese also nicht nur bereitgestellt, sondern additiv bzw. alternativ eingebunden.

Die Aufgabe wird auch gelöst durch ein Computerprogramm mit Steuerbefehlen, welche das vorgeschlagene Verfahren implementieren bzw. die Systemanordnung betreiben.

Erfindungsgemäß ist es besonders vorteilhaft, dass das Verfahren Verfahrensschritte aufweist, welche funktional durch strukturelle Merkmale der Systemanordnung nachgebildet werden können. Darüber hinaus umfasst die Systemanordnung strukturelle Merkmale, welche in ihrer Funktion von den Verfahrensschritten nachgebildet werden können. Folglich ist das vorgeschlagene Verfahren geeignet, die Systemanordnung zu betreiben bzw. die Systemanordnung ist eingerichtet, das Verfahren auszuführen.

Weitere vorteilhafte Ausgestaltungen werden anhand der beigefügten Figuren näher erläutert. Es zeigen:
- Fig. 1:: in einem schematischen Blockdiagramm ein Versuch einer Prüfung einer ersetzten Engine Control Unit als Ausgangspunkt für die vorliegende Erfindung;
- Fig. 2:: in einem schematischen Blockdiagramm eine Erstinbetriebnahme der Systemanordnung gemäß einem Aspekt der vorliegenden Erfindung;
- Fig. 3:: in einem schematischen Blockdiagramm eine Erstinbetriebnahme gemäß eines ersten Ausführungszyklus der vorgeschlagenen Systemanordnung gemäß einem weiteren Aspekt der vorliegenden Erfindung;
- Fig. 4:: in einem schematischen Blockdiagramm eine Erstinbetriebnahme gemäß eines zweiten Ausführungszyklus der vorgeschlagenen Systemanordnung gemäß einem weiteren Aspekt der vorliegenden Erfindung;
- Fig. 5:: in einem schematischen Blockdiagramm eine Erstinbetriebnahme gemäß eines dritten Ausführungszyklus der vorgeschlagenen Systemanordnung gemäß einem weiteren Aspekt der vorliegenden Erfindung;
- Fig. 6:: in einem schematischen Blockdiagramm ein Aspekt eines Fahrzeugstarts im Normalbetrieb gemäß einem Aspekt der vorliegenden Erfindung;
- Fig. 7:: in einem Blockdiagramm ein Fahrzeugstart mit einem Austausch einer Komponente gemäß einem weiteren Aspekt der vorliegenden Erfindung;
- Fig. 8:: in einem Blockdiagramm ein Fahrzeugstart mit einem Austausch einer Komponente gemäß einem weiteren Aspekt der vorliegenden Erfindung;
- Fig. 9:: in einem Blockdiagramm ein Fahrzeugstart mit einem Austausch einer Komponente gemäß einem weiteren Aspekt der vorliegenden Erfindung;
- Fig. 10:: in einem Blockdiagramm ein Fahrzeugstart mit einem Austausch einer Komponente gemäß einem weiteren Aspekt der vorliegenden Erfindung; und
- Fig. 11:: ein schematisches Ablaufdiagramm des vorgeschlagenen Verfahrens zum sicheren Betreiben eines modularen Systems gemäß einem weiteren Aspekt der vorliegenden Erfindung.

In den vorliegenden Figuren werden gleiche Bezugszeichen für gleiche Komponenten verwendet., falls dies nicht anders angegeben ist. Darüber hinaus wird die Erfindung beispielhaft anhand einer sogenannten Engine Control Unit ECU verdeutlicht, welche beispielsweise für eine Steuereinrichtung und/oder eine Steuervorrichtung steht. Die Anbindung des Fahrzeugs kann datentechnisch mittels einer drahtlosen Internetverbindung erfolgen.

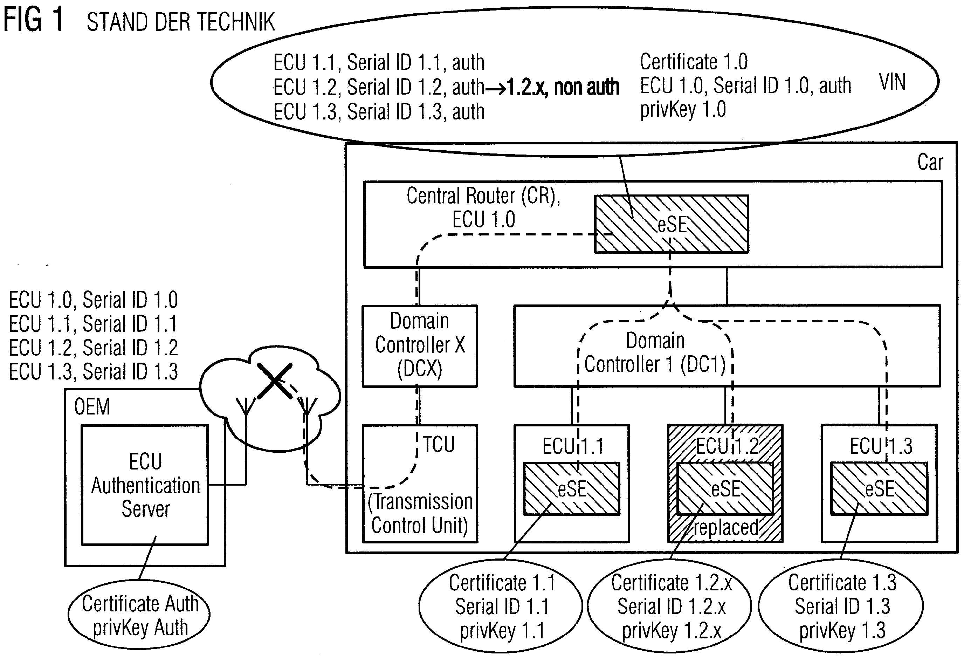

Die vorliegenden Figuren zeigen einzelne Verfahrensschritte bzw. einzelne Kommunikationsabläufe (gestichelte Linie) auf einer Systemanordnung, welche erfindungsgemäß angepasst werden kann. So zeigt Fig. 1 eine Systemanordnung gemäß dem Stand der Technik mit entsprechendem Kommunikationsfluss (gestichelte Linie). Die weiteren Figuren beziehen sich auf die erfindungsgemäße Systemanordnung und das vorgeschlagene Verfahren.

Fig. 1 zeigt in einem schematischen Blockschaltbild eine Prüfung einer ersetzten Engine Control Unit ECU gemäß dem Stand der Technik.

Es gibt eine oder mehrere zentrale Steuerbaugruppen (ECUs), abhängig von der Kommunikations-/Bus-Struktur im Fahrzeug. In den folgenden Beispielen ist die zentrale Steuerbaugruppe der Central Router (CR); es kann aber ebenso ein Domain Controller (DCx) sein.
(1) Der Central Router (CR) baut eine kryptografisch gesicherte Verbindung zwischen ihrem eSE und den eSEs weiterer ECUs auf. Über diesen sicheren Kanal wird die Serial ID der jeweiligen ECU zur zentralen ECU übertragen. Die zentrale Einheit vergleicht die neu empfangenen Serial IDs mit den bisher gespeicherten "alten" IDs.
(2) Bei Unterschieden der "alten" gespeicherten ID und der neu empfangenen ID, versucht der CR eine Netzwerkverbindung zum Authentication Server aufzubauen. Der CR bekommt die Rückmeldung, dass eine Netzwerkverbindung nicht möglich ist.
(3) Die Serial ID kann von der zentralen Steuerbaugruppe nicht geprüft werden.

Der Stand der Technik hat den Nachteil, dass unbedingt eine Netzwerkverbindung - üblicherweise über das Mobilfunknetz - notwendig ist, um diese Prüfung der Validität der neu eingebauten ECU durchführen zu können.

In den Industrieländern existiert eine flächendeckende Netzabdeckung, so dass der Zugang zum Mobilfunknetz im allgemeinen nur dann nicht vorhanden ist, wenn Mobilfunkzellen ausfallen. In anderen Ländern der Welt kann es jedoch durchaus vorkommen, dass keine Netzabdeckung existiert. Dies ist der Fall, wenn eine dringend notwendige Reparatur des Fahrzeugs nicht in der Werkstatt, sondern außerhalb in abgelegenen Gebieten durchgeführt werden muss.

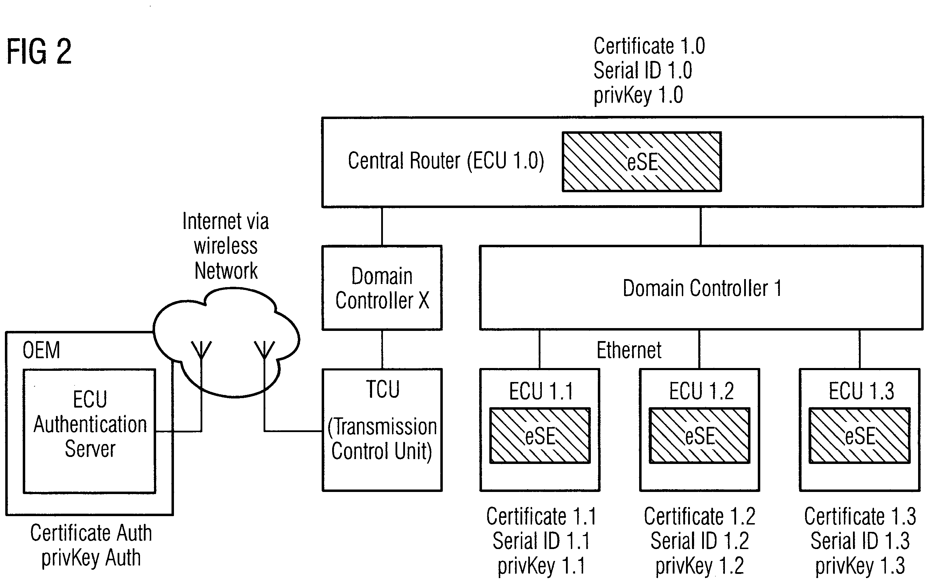

Im Folgenden werden die Fig. 2 bis 10 beschrieben. Insbesondere wird auf einen Signalverlauf bzw. auf einen Nachrichtenaustausch innerhalb der vorgeschlagenen Systemanordnung eingegangen, welcher von den vorgeschlagenen Verfahrensschritten ausgelöst wird.

Wurde im Fahrzeug eine ECU ersetzt und ist keine Netzwerkverbindung zum ECU-Authentisierungsserver verfügbar, löst die entsprechende zentrale Steuerbaugruppe gemäß einem Aspekt der vorliegenden Erfindung einen Sicherheitsmodus aus. Dies geschieht aus Sicherheitsgründen bei jedem Start des Fahrzeugs bis zu dem Zeitpunkt, an dem die ECU durch ein erfolgreiches Kontaktieren des Servers als "authenticate" eingestuft wurde.

Dieser Sicherheitsmodus verlangsamt gemäß einem Aspekt der vorliegenden Erfindung nicht nur den Start des Fahrzeugs, sondern bringt auch während der Fahrt Einschränkungen mit sich, so dass dieser im normalen Betrieb aus Komfortgründen für den Fahrzeugbesitzer nicht wünschenswert ist.

Der Sicherheitsmodus umfasst gemäß einem Aspekt der vorliegenden Erfindung zwei Schritte:
1. Durchlaufen einer speziellen Prüfprozedur, die die ersetzte ECU bestehen muss und
2. Veränderungen an Parametern von ECUs im gesamten Fahrzeug.

### Phase 1: Aktivieren des Testmodus

Schritt 1: Veranlassen von Sicherheitsmaßnahmen beim Start des Fahrzeugs, also vor dem Anlassen des Motors Da der Motor noch nicht läuft, befindet sich das Fahrzeug in einem "sicheren" Zustand. Zunächst sorgt die zentrale Steuerbaugruppe mit einem kryptographisch gesicherten "Test Mode Start"-Kommando dafür, dass die anderen angeschlossenen ECUs die weiteren Nachrichten ignorieren. Dieses "Test Mode Start"-Kommando ist vorzugsweise kryptographisch gesichert, damit die ECUs nachprüfen können, dass das Kommando auch tatsächlich von der zentralen Steuerbaugruppe stammt.

Sobald nur noch die ersetzte ECU Kommandos reguläre Kommandos entgegennimmt, führt die zentrale Steuerbaugruppe mit der ersetzten ECU Tests durch, die aus Sicherheitsgründen während der Fahrt nicht möglich sind. Dies sind beispielsweise:
- Antwortzeit, -verhalten und -inhalt von regulären Kommandos und,
- sofern möglich, Nachrechnen von Prüfsummen über Software der ECU.

Sobald der Domain Controller die Tests abgeschlossen hat, reaktiviert dieser die anderen ECUs mit Hilfe eines kryptographisch gesicherten "Test Mode End"-Kommandos.

Schritt 2: Nach dem erfolgreichen Abschließen des Testmodus, aktiviert die zentrale Steuerbaugruppe - aber noch vor dem Start des Motors - in allen notwendigen ECUs (Central Router, Domain Controller, ...) einen Sicherheitsmodus ("Notrad"-Modus).

Dieser Sicherheitsmodus für das gesamte Fahrzeug sorgt dafür, dass die Unfallgefahr durch eine mögliche Fehlfunktion der ersetzten ECU deutlich reduziert wird. Der Sicherheitsmodus kann
- eine Begrenzung der maximalen Drehzahl des Motors,
- eine Veränderung des Beschleunigungsverhaltens oder
- eine Begrenzung der maximalen Geschwindigkeit des Fahrzeugs
- eine zeitliche Nutzungsbegrenzung
und weitere Veränderungen umfassen.

So lange die ersetzte ECU nicht vom ECU-Authentisierungsserver geprüft und akzeptiert wurde, wird dieser Sicherheitsmodus auch nach einem Abstellen und erneuten Starten des Fahrzeugs beibehalten.

Die Sicherheit des Fahrzeugs und der Insassen wird auch bei einer ausgetauschten, aber noch nicht auf Originalware geprüften ECU gewährleistet. Die verwendeten Sicherheitsmaßnahmen sind akzeptabel, da diese in Industrieländern aufgrund der guten Netzabdeckung nur selten genutzt werden und in Ländern mit abgelegenen Gebieten ohnehin vorsichtiger gefahren wird, so dass die Einschränkungen nicht weiter auffallen.

Fig. 2 zeigt die erfindungsgemäße Systemanordnung und beschreibt insbesondere eine erste Inbetriebnahme. Generell kann es sich bei einem eSE um ein sogenanntes embedded Secure Element handeln, welches erfindungsgemäß ein besonders abgesichertes Sicherheitselement ist. Dieses kann hardwaretechnisch und softwaretechnisch gegen eine Manipulation abgesichert sein. Insbesondere kann ein solches eSE als eine sogenannte embedded Universal Integrated Circuit Card vorliegen. Beispielhaft sind die Steuereinrichtungen als Engine Control Unit ECU eingezeichnet, die mittels einem Domain Controller mit der Steuervorrichtung kommunizieren. Die Steuervorrichtung kann als ein Central Router vorliegen. Wie auf der linken Seite gezeigt ist, können weitere Komponenten vorliegen, und insbesondere können netzwerktechnisch eingerichtete Komponenten vorzusehen sein, die beispielsweise eine drahtlose Netzwerkverbindung mit einem Server herstellen.

Der Authentication Server und ECUs haben ein Zertifikat, das von einer bekannten Root-CA (z. B. OEM) signiert ist. Der Authentication Server und ECUs haben einen privKey. Alle Fahrzeug-ECUs haben eine Serial ID. Das Fahrzeug, d-h- die zentrale Steuerbaugruppe, hat noch keine VIN (Vehicle Identification Number). Diese Parameter sind in einer sicheren Umgebung bzw. einem eSE gespeichert. Bei der Fertigung der ECUs werden personalisierte/ vorinitialisierte eSEs verbaut.

ECUs, die Daten untereinander austauschen gehören gemäß einem Aspekt der vorliegenden Erfindung zu einer Gruppe. Innerhalb einer Gruppe werden die selben Kommunikations-Schlüssel CommKeys benutzt.

SessionKeys werden gemäß einem Aspekt der vorliegenden Erfindung NUR zwischen eSEs genutzt. Sie sind das Ergebnis des Zertifikats/ Schlüsselaustausches beim Aufbau des sicheren Kanals (z.B. SCP11) zwischen eSEs. Da sie das eSE gemäß einem Aspekt der vorliegenden Erfindung niemals verlassen (im Gegensatz zu CommKeys) können sie auch mehrfach benutzt werden. Der sichere Kanal wird nach dem Austausch der Daten zwischen den eSEs entweder sofort wieder abgebaut oder bleibt bestehen (abhängig von Resourcen). Wird der sichere Kanal abgebaut, werden die SessionKeys ungültig und erst bei einem Neuaufbau über z.B. SCP11 wieder neu erzeugt.

Über eine sichere Verbindung (Verschlüsselung über SessionKeys) werden verschiedene CommKeys zwischen eSEs ausgetauscht. Diese CommKeys werden im Betrieb an die Host-SW der ECU "herausgegeben" und verlassen somit das eSE.

CommKeys werden gemäß einem Aspekt der vorliegenden Erfindung von der Host-SW der ECU benutzt, um z. B. Daten zu verschlüseln/ entschlüsseln oder Daten zu signieren/verifizieren. Da CommKeys in der unsicheren der ECU Host-SW benutzt werden, sollten diese Schlüssel regelmäßig getauscht werden.

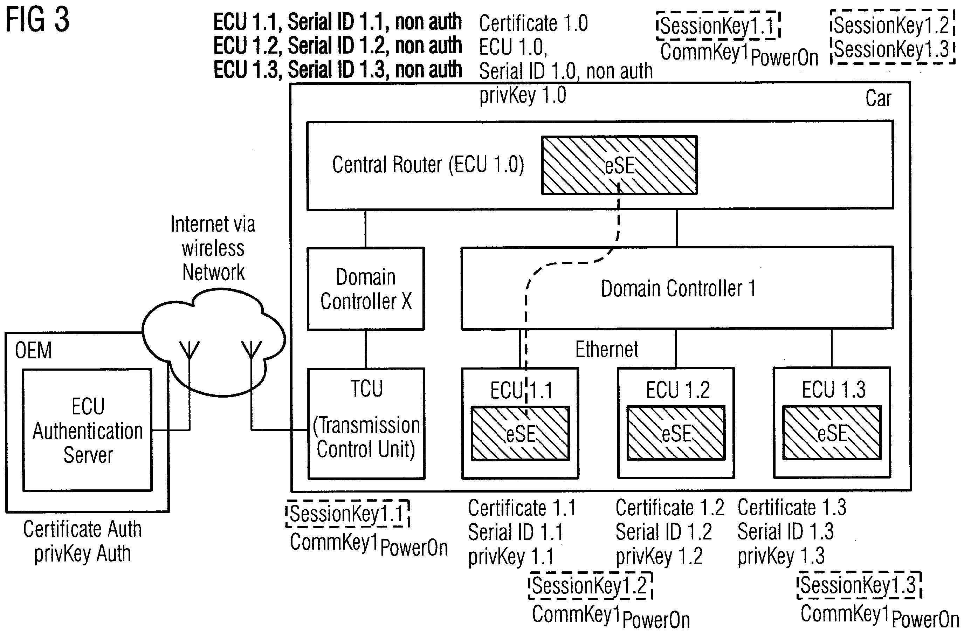

CommKeys[PowerOn] sind CommKeys, die erst beim Neustart des Fahrzeugs als normale CommKeys benutzt werden. Dies stellt sicher, das bei einem Neustart des Fahrzeugs keine Schlüsselaushandlung notwendig ist, die den Start des Fahrzeugs verzögert. Nach Nutzung eines ComKeys[PowerOn] wird dieser als benutzt markiert und kann bei einem weiteren Neustart nicht mehr verwendet werden. Sind keine CommKeys[PowerOn] in der ECU mehr verfügbar, müssen sie erst wieder zwischen zentraler Einheit (z.B. CR) und der jeweiligen ECU über einen sicheren Kanal ausgetauscht werden. Fig. 3 zeigt einen Nachrichtenfluss zwischen der Steuervorrichtung und der Steuereinrichtung. Vorliegend sind beispielsweise beide Vorrichtungen, also die kommunizierende Steuervorrichtung und die Steuereinrichtung als Engine Control Unit vorgesehen, und insbesondere verfügen diese Komponenten jeweils über ein Sicherheitselement.

Die Host-SW der ECUs fragen ihr eSE gemäß einem Aspekt der vorliegenden Erfindung nach einem CommKey (hier: CommKey[PowerOn]). Da in keiner ECU bisher CommKeys vorhanden sind, müssen diese erst in der zentralen Einheit (hier Central Router = CR) erzeugt und über einen sicheren Kanal ausgetauscht werden. Die ECUs 1.1 bis 1.3 können solange nicht miteinander kommunizieren. Im eSE des CR ist noch keine VIN hinterlegt.

Das eSE des CR baut daraufhin nacheinanden zu den eSEs der ECUs 1.1 bis 1.3 einen sicheren Kanal auf (z.B mit SCP11, siehe rote Verbindung). Über diesen sicheren Kanal wird die Serial ID der ECUs ausgelesen und im CR abgelegt. Da die Serial ID der ECUs noch nicht im CR bekannt/ abgelegt sind, werden diese ECUs zunächst als "Non Authenticated" vermerkt. Es können auch noch weitere Daten wie z.B. SW/ HW-Version der ECU übertragen werden.

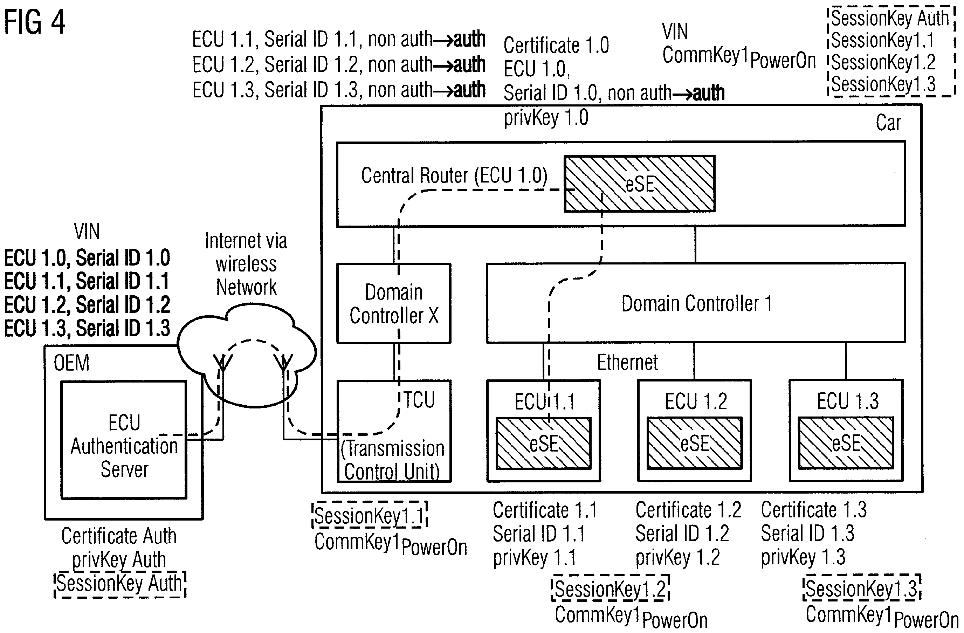

Fig. 4 zeigt eine Nachrichtenkommunikation zwischen einer Steuervorrichtung, vorliegend ECU1.1, und einer Steuervorrichtung, vorliegend ECU1.0, und einem externen Server auf der linken Seite.

Die zentrale ECU des Fahrzeugs baut gemäß einem Aspekt der vorliegenden Erfindung einen sicheren Kanal über das Netzwerk zu einem Authentication Server auf. Über diese Verbindung sendet der CR die Serial IDs (und evtl. weitere Daten) aller verbauter ECUs des Fahrzeugs.

Der Authentication Server nimmt diese Daten entgegen und prüft, ob die Serial IDs und evtl. weitere verknüpfte Daten schon in der Authentication Database vorhanden sind. Bei einem neuen Fahrzeug darf dürfen die Serial IDs und verknüpfte Daten zu diesem Zeitpunkt noch nicht vorhanden sein. Sind die Serial IDs noch nicht verwendet, so legt der Authentication Server die Daten unter einer neuen VIN in seiner Datenbank ab.

Der Authentication Server gibt den Status (auth) der registrierten ECUs und die neue VIN zum CR zurück. Der CR updated den Status der verbauten ECUs.

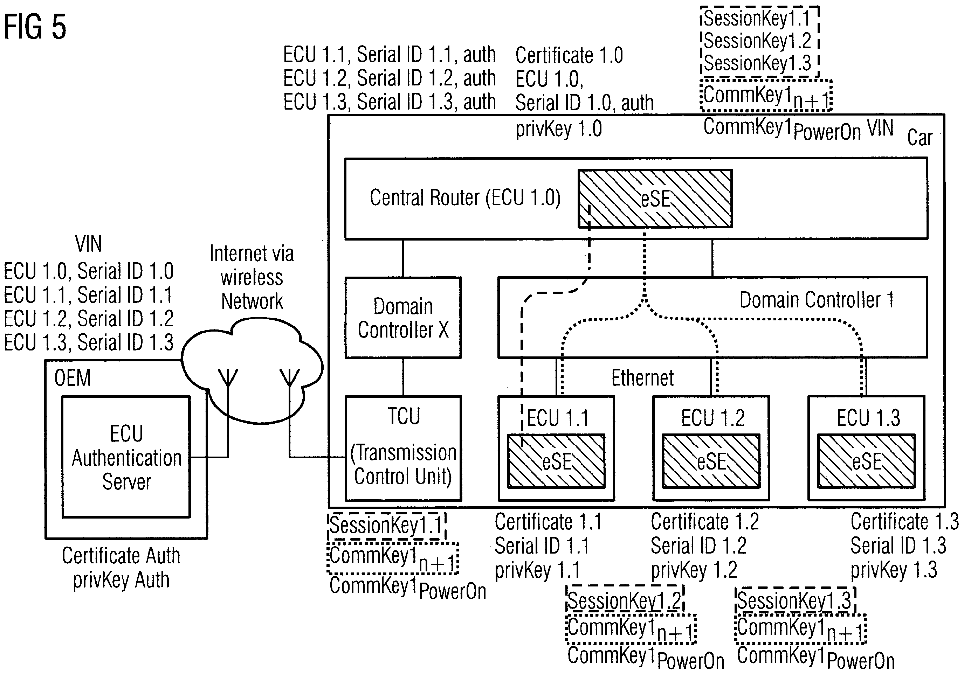

Fig. 5 zeigt einen Nachrichtenfluss zwischen der Steuervorrichtung oben und beispielhaft drei Steuereinrichtungen unten.

Das eSE des CR baut daraufhin zur ECUs 1.1 einen sicheren Kanal auf, falls der Kanal nicht mehr vorhanden ist (z.B mit SCP11) gemäß einem Aspekt der vorliegenden Erfindung.

Im eSE des CR werden dann verschiedene CommKeys für die Kommunikation erzeugt. Diese CommKeys werden an die ECU über den sicheren Kanal übergeben.

Die ECUs 1.1 bis ECU 1.3 senden eine Kontrollnachricht (mit Serial ID), unter Verwendung des gültigen CommKey der Gruppe an den CR. Zu diesem Zeitpunkt weiß der CR, ob alle ECUs im Besitz eines gültigen CommKeys sind. Es können auch noch weitere Daten wie z.B. SW/HW-Version der ECU übertragen werden.

Die Schritte 2. bis 4. führt der CR für alle ECUs der Gruppe aus. Damit haben die ECUs 1.0 (CR) bis ECU 1.3 die gleichen CommKeys (siehe grüne Verbindung) über den sie sicher miteinander kommunuzieren können.

Es folgt ein normaler Kommunikationablauf zwischen den ECUs.

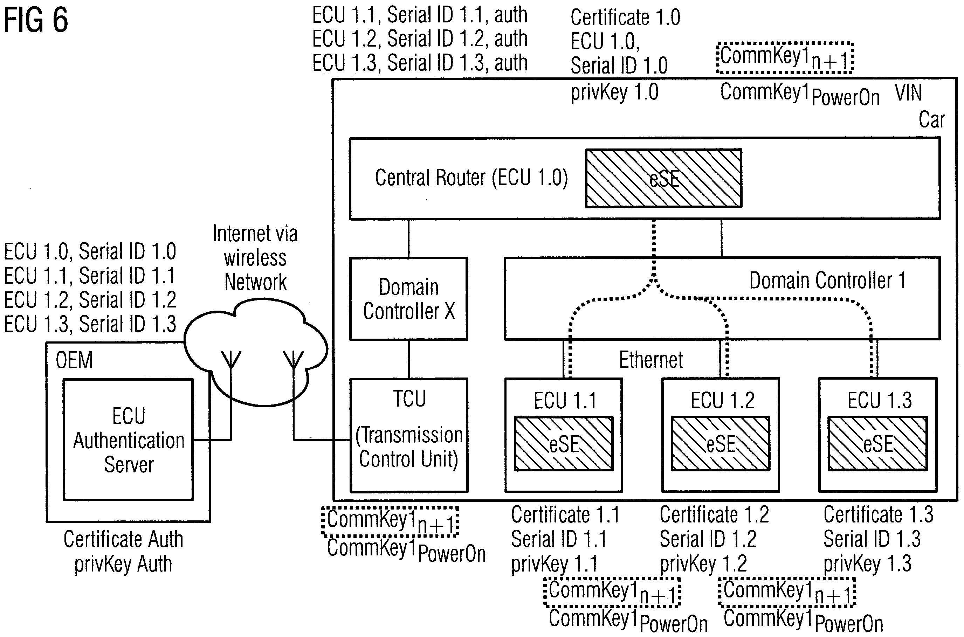

Fig. 6 zeigt einen Normalbetrieb der vorgeschlagenen Systemanordnung.

Die Host-SW der ECUs fragen gemäß einem Aspekt der vorliegenden Erfindung ihr eSE nach einem CommKey. Alle ECUs haben einen hinterlegten CommKey[PowerOn], den sie an die Host-SW als CommKey herausgeben. Im CR eSE haben alle ECUs den Status "registered". Im CR eSE ist eine VIN hinterlegt.

Die ECUs 1.1 bis ECU 1.3 senden eine Kontrollnachricht (mit Serial ID), unter Verwendung des gültigen CommKey der Gruppe an den CR. Zu diesem Zeitpunkt weiß der CR, ob alle ECUs im Besitz eines gültigen CommKeys sind.

Es folgt ein normaler Kommunikationablauf zwischen den ECUs.

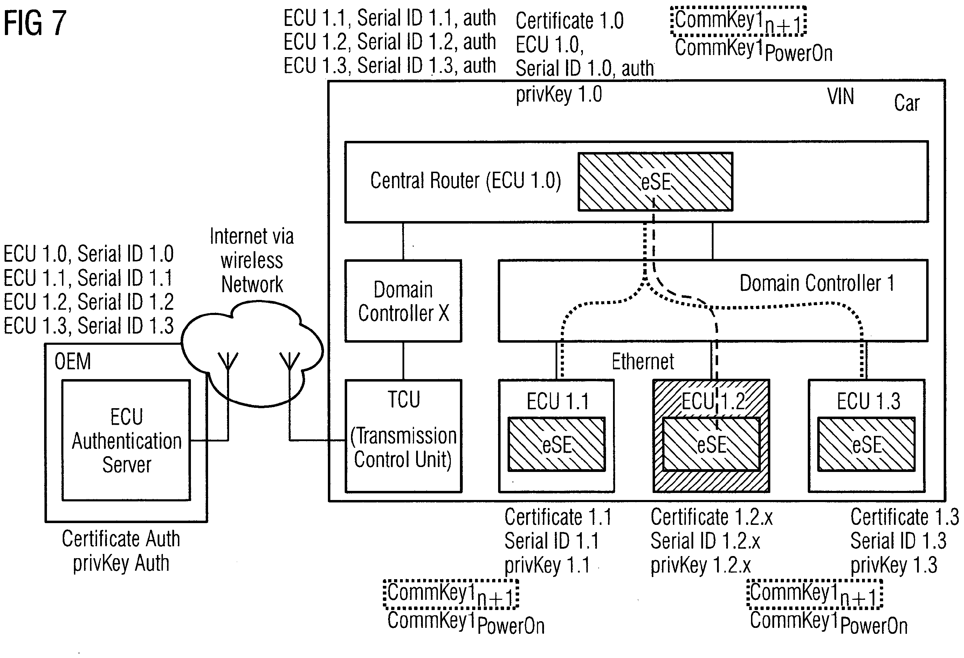

Fig. 7 zeigt einen Austausch einer Steuereinrichtung, vorliegend ECU1.2.

Die ECU 1.2 wurde nach einem Defekt durch eine neue ECU ersetzt.

Die Host-SW der ECUs fragen ihr eSE nach einem CommKey. Alle ECUs außer der ECU 1.2 haben einen hinterlegten CommKey[PowerOn], den sie an die Host-SW als CommKey herausgeben. Im CR eSE haben alle ECUs den Status "registered". Im CR eSE ist eine VIN hinterlegt.

Die ECUs 1.1 und ECU 1.3 senden eine Kontrollnachricht (mit Serial ID), unter Verwendung des gültigen CommKey der Gruppe an den CR. Die ECU 1.2 sendet keine Kontrollnachricht.

Der CR erkennt, dass die ECU 1.2 nichts gesendet hat und anscheinend keinen CommKey bzw. CommKey [PowerOn] hat.

Das eSE des CR baut daraufhin zur ECUs 1.2 einen sicheren Kanal auf (z.B mit SCP11). Über diese Verbindung wird die Serial ID der ECU und evtl. auch weitere Daten zum CR übertragen.

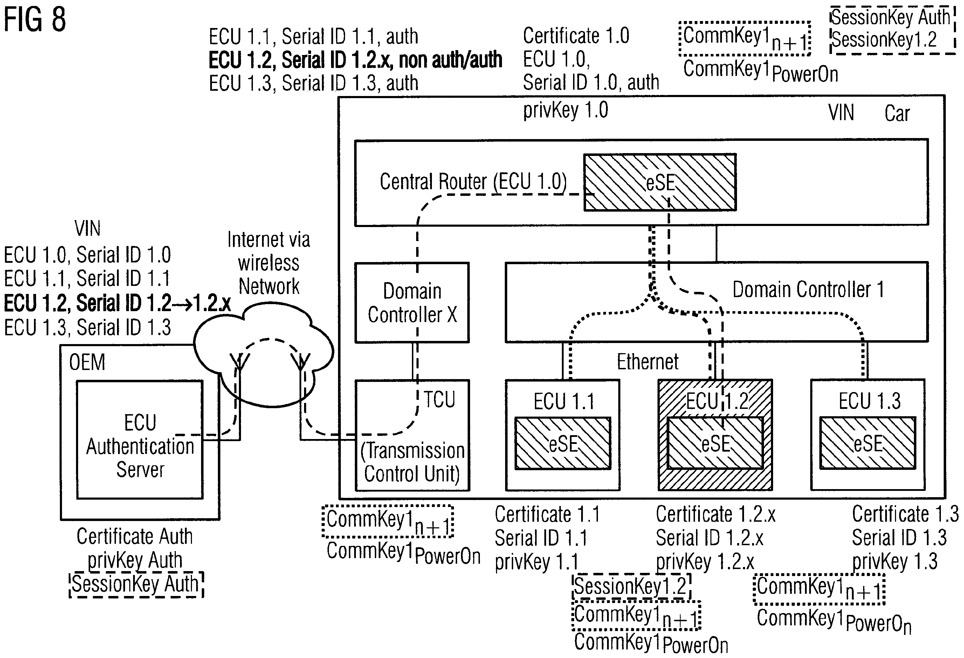

Fig. 8 zeigt einen weiteren Aspekt eines Austausches einer Steuereinrichtung, vorliegend Engine Control Unit 1.2.

Die zentrale ECU des Fahrzeugs baut gemäß einem Aspekt der vorliegenden Erfindung einen sicheren Kanal über das Netzwerk zu einem Authentication Server auf. Über diese Verbindung sendet der CR die Serial IDs (und evtl. weitere Daten) aller verbauter ECUs des Fahrzeugs.

Der Authentication Server nimmt diese Daten entgegen und prüft, ob die Serial IDs zum Fahrzeug passen und ob evtl. eine ECU ausgetauscht wurde. Wurde wie im Beispiel eine ECU getauscht, wird geprüft, ob die Serial ID plausibel ist. Sie muß aus dem zulässigen ID-Pool stammen (evtl. auch länderspezifisch) und darf nicht schon bei einem anderen Fahrzeug verwendet werden. Ebenso wird die HW/SW Kompatibilität der neuen ECU zum vorhandenen HW/SW Stand des Fahrzeugs geprüft. Ist die Prüfung positiv verlaufen wird die neue ECU mit der neuen Serial ID im Authentication Server hinterlegt.

Der Authentication Server gibt den Status (auth) der registrierten ECUs zum CR zurück. Der CR updated then Status der verbauten ECUs. Die ECU 1.2 geht in den Status "authenticated".

Der aktuelle CommKey der Gruppe sowie weitere CommKey[PowerOn] werden vom eSE des CR an die ECU über den sicheren Kanal übergeben. Alternativ können alle Keys der Gruppe neu ausgetauscht werden.

Die ECUs 1.2 sendet abschließend eine Kontrollnachricht (mit Serial ID), unter Verwendung des gültigen CommKey der Gruppe an den CR (siehe grün gestrichelte Verbindung). Zu diesem Zeitpunkt weiß der CR, ob alle ECUs im Besitz eines gültigen CommKeys sind.

Es folgt ein normaler Kommunikationablauf zwischen den ECUs.

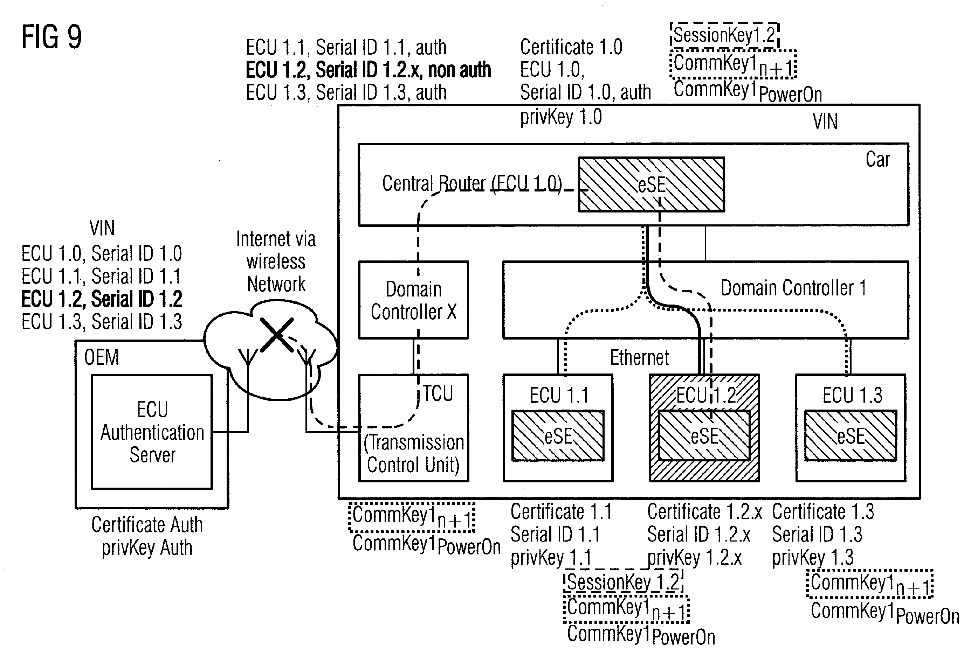

Fig. 9 zeigt einen weiteren Aspekt eines Austausches einer Steuereinrichtung gemäß einem Aspekt der vorliegenden Erfindung.

Die zentrale ECU des Fahrzeugs versucht gemäß einem Aspekt der vorliegenden Erfindung dann einen sicheren Kanal über das Netzwerk zu einem Authentication Server aufzubauen. Die Verbindung kann auch nach mehrmaligen Versuchen nicht hergestellt werden (z.B. Netzwerkproblemen, Serverausfall, ...).

Nach evtl. Wiederholversuchen bricht der CR vorerst ab und belässt die ECU im Status "Non Authenticated".

Bevor die neue nicht authentisierte ECU in die Fahrzeugkommunikation integriert wird, müssen von dieser Baugruppe bestimmte Tests fehlerfrei durchlaufen werden. Der CR sendet dazu zu allen authentisierten ECUs der Gruppe ein "Test Mode Start". Damit ignorieren sie alle Messages auf dem Bussystem bis zu einem abschließenden "Test Mode End" Kommando.

Über den sicheren Kanal zwischen eSE des CR und eSE der ECU 1.2 sowie über eine nicht gesicherte Kommunikationan zwischen CR und werden jetzt verschiedene Tests durchgeführt, die einen eingeschränkten Sicherheitsbetrieb sicherstellen sollen.

Nach Testende sendet der CR gemäß einem Aspekt der vorliegenden Erfindung allen authentisierten ECUs der Gruppe ein "Test Mode End". Anschließend werden alle authentisierten ECUs vom CR in den Notbetriebsmode "Emergency Operation" versetzt. Damit ist der Fahrzeugbetrieb deutlich reduziert (Drehzahl, Geschwindigkeit, Beschleunigung); so wie bei einem Reserverad. Auch die zeitliche Nutzung des Notbetriebs kann beschränkt sein. Dann läßt sich das Fahrzeug gar nicht mehr starten.

Der aktuelle CommKey der Gruppe sowie weitere CommKey[PowerOn] werden vom eSE des CR an die ECU 1.2 über den sicheren Kanal übergeben. Alternativ können alle Keys der Gruppe neu ausgetauscht werden.

Die ECUs 1.2 sendet abschließend eine Kontrollnachricht unter Verwendung des gültigen CommKey der Gruppe an den CR.. Zu diesem Zeitpunkt weiß der CR, ob alle ECUs im Besitz eines gültigen CommKeys sind.

Es folgt ein eingeschränkter Kommunikationablauf zwischen den ECUs.

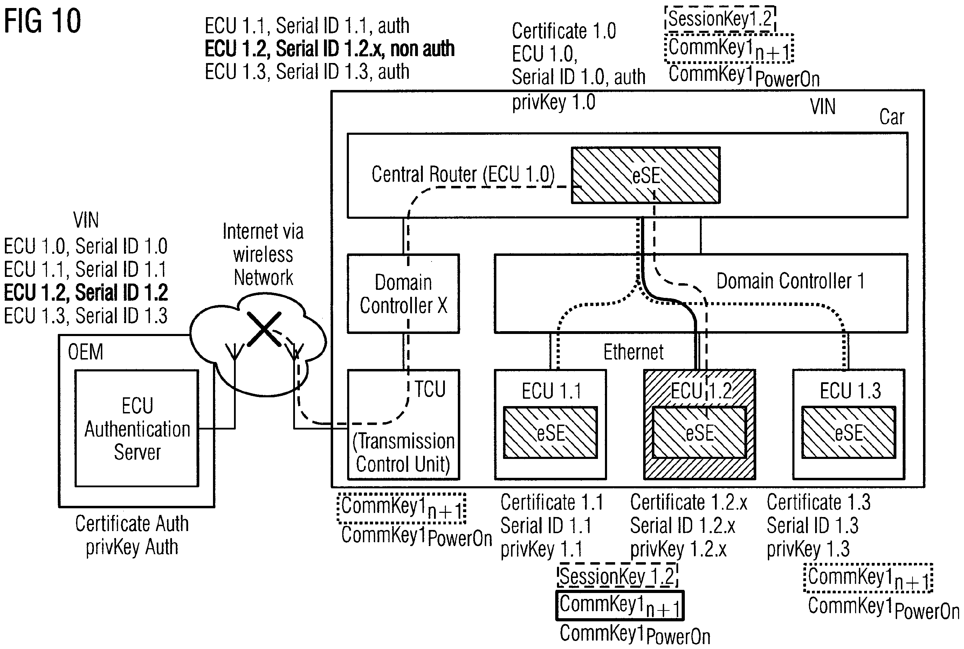

Fig. 10 zeigt einen weiteren Aspekt eines Austausches einer Steuereinheit gemäß der vorliegenden Erfindung.

Die zentrale ECU des Fahrzeugs versucht gemäß einem Aspekt der vorliegenden Erfindung dann einen sicheren Kanal über das Netzwerk zu einem Authentication Server aufzubauen. Die Verbindung kann auch nach mehrmaligen Versuchen nicht hergestellt werden (z.B. Netzwerkproblemen, Serverausfall, ...).

Nach evtl. Wiederholversuchen bricht der CR vorerst ab und belässt die ECU im Status "Non Authenticated".

Bevor die neue nicht authentisierte ECU in die Fahrzeugkommunikation integriert wird, müssen von dieser Baugruppe bestimmte Tests fehlerfrei durchlaufen werden. Der CR sendet dazu zu allen authentisierten ECUs der Gruppe ein "Test Mode Start". Damit ignorieren sie alle Messages auf dem Bussystem bis zu einem abschließenden "Test Mode End" Kommando.

Über den sicheren Kanal zwischen eSE des CR und eSE der ECU 1.2 sowie über eine nicht gesicherte Kommunikationan zwischen CR und ECU (siehe gestrichelte Verbindung) werden jetzt verschiedene Tests durchgeführt, die einen eingeschränkten Sicherheitsbetrieb sicherstellen sollen.

Nach Testende sendet gemäß der vorliegenden Erfindung der CR allen authentisierten ECUs der Gruppe ein "Test Mode End". Anschließend werden alle authentisierten ECUs vom CR in den Notbetriebsmode "Emergency Operation" versetzt. Damit ist der Fahrzeugbetrieb deutlich reduziert (Drehzahl, Geschwindigkeit, Beschleunigung); so wie bei einem Reserverad. Auch die zeitliche Nutzung des Notbetriebs kann beschränkt sein. Dann läßt sich das Fahrzeug gar nicht mehr starten.

Über den sicheren Kanal werden vom eSE des CR an die ECU 1.2 neue CommKeys sowie weitere CommKey[PowerOn] übergeben, die nicht zur Gruppe gehören. Alle Nachrichten von/zur ECU 1.2 müssen jetzt über den CR (ECU 1.0) laufen, werden dort, wenn möglich, Checks unterzogen und dann erst weiter zu den Gruppen-ECUs gesendet.

Die ECUs 1.2 sendet abschließend eine Kontrollnachricht unter Verwendung des individuellen CommKey an den CR. Zu diesem Zeitpunkt weiß der CR, ob alle ECUs im Besitz eines gültigen CommKeys sind.

Es folgt ein eingeschränkter Kommunikationablauf zwischen den ECUs.

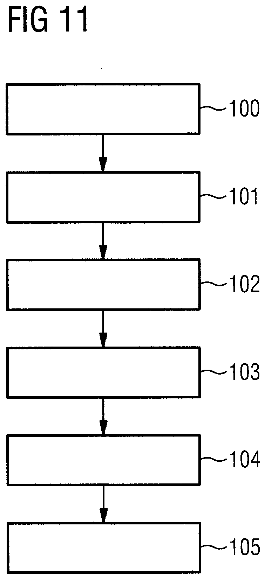

Fig. 11 zeigt in einem schematischen Ausführungsdiagramm ein Verfahren zum sicheren Betreiben eines modularen Systems in einem Kraftfahrzeug gemäß einem Aspekt der vorliegenden Erfindung, aufweisend ein Bereitstellen 100 einer zentralen Steuervorrichtung, ein Bereitstellen 101 einer Mehrzahl von Steuereinrichtungen, welche jeweils mit der zentralen Steuervorrichtung kommunikativ gekoppelt sind, wobei ein Aktivieren 103 eines Sicherheitsmodus bei einem Starten 102 der Steuervorrichtung und der Mehrzahl von Steuereinrichtungen, ein iteratives Abprüfen 104 mindestens eines vorbestimmten Qualitätsmerkmals der Steuereinrichtungen durch die Steuervorrichtung, und ein Deaktivieren 105 des Sicherheitsmodus, falls bei allen Steuereinrichtungen das abgeprüfte 104 Qualitätsmerkmal vorhanden ist, vorgesehen ist.

Der Fachmann erkennt hierbei, dass die einzelnen Verfahrensschritte iterativ und/oder in anderer Reihenfolge ausgeführt werden können. Auch können einzelne Verfahrensschritte Unterschritte aufweisen. Beispielsweise kann das Bereitstellen der zentralen Steuervorrichtung und das Bereitstellen der Steuereinrichtungen in anderer Reihenfolge erfolgen bzw. iterativ erfolgen, da mehrere Steuereinrichtungen bereitgestellt werden.

## Patentansprüche

1. Verfahren zum sicheren Betreiben eines modularen Systems in einem Kraftfahrzeug, aufweisend:
- ein Bereitstellen (100) einer zentralen Steuervorrichtung des modularen Systems;
- ein Bereitstellen (101) einer Mehrzahl von Steuereinrichtungen des modularen Systems, welche jeweils mit der zentralen Steuervorrichtung kommunikativ gekoppelt sind;
- ein Aktivieren (103) eines Sicherheitsmodus bei einem Starten (102) der Steuervorrichtung und der Mehrzahl von Steuereinrichtungen; und
- ein Deaktivieren (105) des Sicherheitsmodus, falls bei allen Steuereinrichtungen das abgeprüfte (104) Qualitätsmerkmal vorhanden ist, **gekennzeichnet** durch-ein iteratives Abprüfen (104) mindestens eines vorbestimmten Qualitätsmerkmals der Steuereinrichtungen durch die Steuervorrichtung,
wobei das iterative Abprüfen (104) bei einem Erreichen eines Abbruchkriteriums nicht mehr ausgeführt wird, sondern eine Fehlerroutine gestartet wird.

2. Verfahren nach Anspruch 1, **dadurch gekennzeichnet, dass** die Steuereinrichtungen und/ oder die Steuervorrichtung jeweils als Engine Control Units (ECU) bereitgestellt (100, 101) werden.

3. Verfahren nach Anspruch 1 oder 2, **dadurch gekennzeichnet, dass** die Steuereinrichtungen und die Steuervorrichtung mittels mindestens einer kryptographisch gesicherten Verbindung kommunizieren.

4. Verfahren nach einem der vorhergehenden Ansprüche, **dadurch gekennzeichnet, dass** der Sicherheitsmodus eine eingeschränkte Konfiguration des Kraftfahrzeugs vorsieht.

5. Verfahren nach einem der vorhergehenden Ansprüche, **dadurch gekennzeichnet, dass** der Sicherheitsmodus eine Begrenzung einer maximalen Drehzahl eines Motors, eine Veränderung eines Beschleunigungsverhaltens, eine Begrenzung einer maximalen Geschwindigkeit des Kraftfahrzeugs, eine zeitliche Nutzungsbegrenzung und/ oder eine Umsetzung einer Sicherheitsmaßnahme umfasst.

6. Verfahren nach einem der vorhergehenden Ansprüche, **dadurch gekennzeichnet, dass** das mindestens eine vorbestimmte Qualitätsmerkmal statisch und/ oder dynamisch definiert wird.

7. Verfahren nach einem der vorhergehenden Ansprüche, **dadurch gekennzeichnet, dass** zum Abprüfen (104) des mindestens einen vorbestimmten Qualitätsmerkmals die Steuereinrichtungen dynamisch angesteuert werden.

8. Verfahren nach einem der vorhergehenden Ansprüche, **dadurch gekennzeichnet, dass** zum Abprüfen (104) des mindestens einen vorbestimmten Qualitätsmerkmals die Steuereinrichtungen sensorisch ausgelesen werden.

9. Verfahren nach einem der vorhergehenden Ansprüche, **dadurch gekennzeichnet, dass** zum Abprüfen (104) des mindestens einen vorbestimmten Qualitätsmerkmals eine Verbindung mit einem Server eingerichtet wird.

10. Verfahren nach einem der vorhergehenden Ansprüche, **dadurch gekennzeichnet, dass** zum Abprüfen (104) des mindestens einen vorbestimmten Qualitätsmerkmals eine Identifikationsnummer mindestens einer Steuereinrichtung überprüft wird.

11. Verfahren nach einem der vorhergehenden Ansprüche, **dadurch gekennzeichnet, dass** mittels der Steuereinrichtungen und/ oder der Steuervorrichtung mindestens eine Funktion eines Kraftfahrzeugs mit Elektromotor und/ oder Verbrennungsmotor gesteuert wird.

12. Verfahren nach einem der vorhergehenden Ansprüche, **dadurch gekennzeichnet, dass** das Deaktivieren (105) des Sicherheitsmodus ein Ausführen eines normales Betriebsmodus vorsieht.

13. Systemanordnung zum sicheren Betreiben eines modularen Systems in einem Kraftfahrzeug, aufweisend:
- eine zentrale Steuervorrichtung des modularen Systems;
- eine Mehrzahl von Steuereinrichtungen des modularen Systems, welche jeweils mit der zentralen Steuervorrichtung kommunikativ gekoppelt sind;- eine Sicherungseinheit eingerichtet zum Aktivieren (103) eines Sicherheitsmodus bei einem Starten (102) der Steuervorrichtung und der Mehrzahl von Steuereinrichtungen; und
- eine Freigabeeinheit eingerichtet zum Deaktivieren (105) des Sicherheitsmodus, falls bei allen Steuereinrichtungen das abgeprüfte (104) Qualitätsmerkmal vorhanden ist,
**gekennzeichnet durch**
- eine Prüfeinheit eingerichtet zum iterativen Abprüfen (104) mindestens eines vorbestimmten Qualitätsmerkmals der Steuereinrichtungen durch die Steuervorrichtung,
wobei die Prüfeinheit weiter eingerichtet ist, das iterative Abprüfen (104) bei einem Erreichen eines Abbruchkriteriums nicht mehr auszuführen, sondern eine Fehlerroutine zu starten.

14. Computerprogrammprodukt, umfassend Befehle, die bewirken, dass die Vorrichtung des Anspruchs 13 die Verfahrensschritte nach Anspruch 1 ausführt.

## Claims

1. A method for securely operating a modular system in a motor vehicle, having:
- supplying (100) a central control device of the modular system;
- supplying (101) a plurality of control devices of the modular system, which are each communicatively coupled to the central control device;
- activating (103) a security mode when starting (102) the control device and the plurality of control devices; and
- deactivating (105) the security mode if the checked (104) quality feature is present in all control devices,
**characterized by**
- an iterative checking (104) of at least one predetermined quality feature of the control devices by the control device,
wherein the iterative checking (104) is no longer executed when an abortion criterion is reached, but an error routine is started.

2. The method according to claim 1, **characterized in that** the control devices and/or the control device are each supplied (100, 101) as engine control units (ECU).

3. The method according to claim 1 or 2, **characterized in that** the control devices and the control device communicate by means of at least one crypto-graphically secured connection.

4. The method according to any of the preceding claims, **characterized in that** the security mode provides for a restricted configuration of the motor vehicle.

5. The method according to any of the preceding claims, **characterized in that** the security mode includes a limitation of a maximum rotational speed of a motor / an engine, a change in an acceleration behavior, a limitation of a maximum speed of the motor vehicle, a temporal usage limitation and/or an implementation of a security measure.

6. The method according to any of the preceding claims, **characterized in that** the at least one predetermined quality feature is defined statically and/or dynamically.

7. The method according to any of the preceding claims, **characterized in that** for checking (104) the at least one predetermined quality feature, the control devices are driven dynamically.

8. The method according to any of the preceding claims, **characterized in that** in order to check (104) the at least one predetermined quality feature, the control devices are read out by sensors.

9. The method according to any of the preceding claims, **characterized in that** a connection to a server is set up to check (104) the at least one predetermined quality feature.

10. The method according to any of the preceding claims, **characterized in that** an identification number of at least one control device is verified in order to check (104) the at least one predetermined quality feature.

11. The method according to any of the preceding claims, **characterized in that** at least one function of a motor vehicle with an electric motor and/or internal combustion engine is controlled by means of the control devices and/or the control device.

12. The method according to any of the preceding claims, **characterized in that** the deactivation (105) of the security mode provides for an execution of a normal operating mode.

13. A system arrangement for the secure operation of a modular system in a motor vehicle, having:
- a central control device of the modular system;
- a plurality of control devices of the modular system, which are each communicatively coupled to the central control device,
- a securing unit set up to activate (103) a security mode when starting (102) the control device and the plurality of control devices; and
- a release unit set up to deactivate (105) the security mode if the checked (104) quality feature is present in all control devices,
**characterized by**
- a checking unit set up to iteratively check (104) at least one predetermined quality feature of the control devices by the control device;
wherein the checking unit is further set up to no longer execute the iterative checking (104) when an abortion criterion is reached, but to start an error routine.

14. A computer program product comprising commands which cause the apparatus of claim 13 to execute the method steps according to claim 1.

## Revendications

1. Procédé pour faire fonctionner de manière sécurisée un système modulaire dans un véhicule automobile, comprenant:
- une mise à disposition (100) d'un dispositif central de commande du système modulaire;
- une mise à disposition (101) d'une pluralité d'équipements de commande du système modulaire, lesquels sont respectivement couplés de manière communicative au dispositif central de commande;
- une activation (103) d'un mode sécurité lors d'un démarrage (102) du dispositif de commande et de la pluralité d'équipements de commande; et
- une désactivation (105) du mode sécurité dans le cas où, à tous les équipements de commande, il y a la caractéristique de qualité ayant fait l'objet de la vérification (104),
**caractérisé par** une vérification itérative (104) d'au moins une caractéristique prédéterminée de qualité des équipements de commande par le dispositif de commande,
cependant que, lorsqu'un critère d'interruption est atteint, la vérification itérative (104) n'est plus exécutée, mais une routine de gestion d'erreur est démarrée.

2. Procédé selon la revendication 1, **caractérisé en ce que** les équipements de commande et/ou le dispositif de commande sont respectivement mis à disposition (100, 101) en tant qu'Engine Control Units (ECU).

3. Procédé selon la revendication 1 ou 2, **caractérisé en ce que** les équipements de commande et le dispositif de commande communiquent au moyen d'au moins une connexion sécurisée cryptographiquement.

4. Procédé selon une des revendications précédentes, **caractérisé en ce que** le mode sécurité prévoit une configuration restreinte du véhicule automobile.

5. Procédé selon une des revendications précédentes, **caractérisé en ce que** le mode sécurité comprend une limitation d'une vitesse maximale de rotation d'un moteur, une modification d'un comportement à l'accélération, une limitation d'une vitesse maximale du véhicule automobile, une limitation temporelle d'utilisation et/ou une mise en œuvre d'une mesure de sécurité.

6. Procédé selon une des revendications précédentes, **caractérisé en ce que** la au moins une caractéristique prédéterminée de qualité des équipements de commande est déterminée statiquement et/ou dynamiquement.

7. Procédé selon une des revendications précédentes, **caractérisé en ce que**, pour la vérification (104) de la au moins une caractéristique prédéterminée de qualité, les équipements de commande sont commandés dynamiquement.

8. Procédé selon une des revendications précédentes, **caractérisé en ce que**, pour la vérification (104) de la au moins une caractéristique prédéterminée de qualité, les équipements de commande sont lus sensoriellement.

9. Procédé selon une des revendications précédentes, **caractérisé en ce que**, pour la vérification (104) de la au moins une caractéristique prédéterminée de qualité, une connexion avec un serveur est établie.

10. Procédé selon une des revendications précédentes, **caractérisé en ce que**, pour la vérification (104) de la au moins une caractéristique prédéterminée de qualité, un numéro d'identification d'au moins un équipement de commande est contrôlé.

11. Procédé selon une des revendications précédentes, **caractérisé en ce que**, au moyen des équipements de commande et/ou du dispositif de commande, au moins une fonction d'un véhicule automobile à moteur électrique et/ou à moteur à combustion est commandée.

12. Procédé selon une des revendications précédentes, **caractérisé en ce que** la désactivation (105) du mode sécurité prévoit une exécution d'un mode normal de fonctionnement.

13. Agencement de système pour faire fonctionner de manière sécurisée un système modulaire dans un véhicule automobile, comprenant:
- un dispositif central de commande du système modulaire;
- une pluralité d'équipements de commande du système modulaire, lesquels sont respectivement couplés de manière communicative avec le dispositif central de commande;
- une unité de sécurisation équipée pour l'activation (103) d'un mode sécurité lors d'un démarrage (102) du dispositif de commande et de la pluralité d'équipements de commande; et
- une unité de déblocage équipée pour la désactivation (105) du mode sécurité dans le cas où, à tous les équipements de commande, il y a la caractéristique de qualité ayant l'objet de la vérification (104),
**caractérisé par**
- une unité de vérification équipée pour la vérification itérative (104) d'au moins une caractéristique prédéterminée de qualité des équipements de commande par le dispositif de commande,
cependant que l'unité de vérification est en outre équipée pour, si un critère d'interruption est atteint, ne plus exécuter la vérification itérative (104), mais démarrer une routine de gestion d'erreur.

14. Produit programme d'ordinateur comprenant des instructions qui ont pour effet que le dispositif de la revendication 13 exécute les instructions du procédé selon la revendication 1.
